# EUROPEAN PATENT SPECIFICATION

(11) **EP 2 112 191 B1**
(45) Date of publication and mention of the grant of the patent: **29.10.2014**
(21) Application number: 09251164.1
(22) Date of filing: 23.04.2009
(51) Int. Cl.: C08J 3/03, C09D 183/04, C08L 29/04

(54) **Silicone emulsion releasing composition and releasing substrate using the same**
Antihaftende Silikonemulsionszusammensetzung und damit hergestelltes antihaftendes Substrat
Composition d'émulsion de silicone anti-adhésive et substrat anti-adhésif l'utilisant

(30) Priority: 24.04.2008 JP 2008113449
(43) Date of publication of application: 28.10.2009
(73) Proprietor: Shin-Etsu Chemical Co., Ltd., Tokyo 100-0004 (JP)
(72) Inventor: Yamamoto, Kenji, Annaka-shi Gunma, 379-0244 (JP); Nakajima, Tsutomu, Annaka-shi Gunma, 379-0244 (JP); Irifune, Shinji, Annaka-shi Gunma, 379-0244 (JP)
(74) Representative: Duckworth, Timothy John

(56) References cited:
- EP-A- 1 323 796
- GB-A- 2 307 239
- JP-A- 6 041 323
- JP-A- 8 245 887
- US-A- 5 095 067
- US-A1- 2005 119 406
- US-B1- 6 294 608

## Description

### Field of the Invention

The present invention relates to a silicone emulsion releasing composition, and particularly relates to an addition reaction type silicone emulsion releasing composition that is advantageous not only from the viewpoint of safety and hygiene, but also from that of environmental friendliness.

### Background Art

In order to prevent adhesion and sticking between a substrate such as paper or plastic film and a tacky material, a releasing silicone composition has been used. At present, releasing silicone compositions are widely used in the form of an organic solvent solution.
However, the organic solvent solution of this type had the disadvantages that the main ingredient was a high molecular weight crude rubber organopolysiloxane which was difficult to handle, and since a large amount of solvent is used, it led to air pollution, and was undesirable from the viewpoint of safety and hygiene. To deal with these disadvantages, it has been considered to collect the solvent when the releasing silicone composition was used, but this also required a large amount of investment for installing solvent recovery equipment.

A non-solvent releasing silicone composition which does not use a solvent at all is also known, but there was the problem of upgrading equipment since the present coating equipment cannot be used, and advanced technology was also required to uniformly coat a thin film.

To resolve this problem, an emulsion type releasing silicone composition is known in the art, wherein the curing type of the silicone composition is a condensation reaction type or an addition reaction type.

Among such emulsion type silicone compositions, a condensation reaction type silicone composition has long been used as in the case of the aforesaid organic solvent type, but since there is a defect that its pot life is very short, it is used only for very special applications. On the other hand, as an example of an addition reaction type silicone composition, two emulsions are mixed to manufacture a releasing silicone composition (Japanese Patent publication B No. S57-53143); a releasing composition for paper manufactured by emulsion polymerization (Japanese Patent publication A No. S54-52160), and a composition using a catalyst of two-liquid type (Japanese Patent publication B No. H06-47624), have also been proposed.

However, since the releasing silicone composition manufactured by mixing the two emulsions is prepared by mixing one emulsion comprising an organovinyl polysiloxane, a platinum compound, an emulsifier and water, with another emulsion comprising an organohydrogen polysiloxane, an emulsifier and water, there is a defect that the curing rate of the composition produced by mixing is slow.

The releasing composition for paper manufactured by the aforesaid emulsion polymerization method had an improved residual adhesion rate, but the properties obtained were still inferior to those of the composition obtained by the mechanical emulsifying method, and the peeling force was relatively heavy.

The emulsion manufactured using the aforesaid two-liquid type catalyst, on the other hand, has a characteristic that it uses two kinds of catalyst consisting of a platinum compound and a self-emulsifying catalyst mixed with an emulsifier, together with an emulsion consisting of an organovinyl polysiloxane, organohydrogen polysiloxane, emulsifier and water. However, although the releasing silicone composition obtained in this way had excellent stability and releasing properties, the two catalysts had to be stirred beforehand when performing self-emulsification, and the time during which they could be used was also short. Further, since three liquids were used overall, there was a problem that the dispersibility of the catalysts in the main emulsion greatly affected the properties of the composition obtained. Still further, when the emulsifier was mixed with the platinum compound, there was a problem that catalytic ability of the catalyst declines with time.

The aforesaid problem in the case of using a self-emulsifying catalyst was overcome by using an emulsion of a platinum catalyst using a specific emulsifier as the catalyst for a silicone emulsion (Japanese Patent publication A No. H08-245887). Due to this invention, a silicone emulsion releasing composition having excellent curing properties, releasing properties and residual adhesive property, in addition to the convenience of using a two-liquid composition, was obtained.

However, the cured film of the releasing composition is used for various purposes with different requirements for peeling properties, and the silicone composition constituting the aforesaid composition known in the art was still not able to meet general demands for a composition that ranges from a light peeling force to a heavy peeling force.

Usually, since the peeling properties of a releasing composition are determined mainly by the organovinyl polysiloxane which is a principal ingredient, if this organovinyl polysiloxane can be changed arbitrarily, a wider range of peeling properties can be covered. However, when various kinds of silicone emulsion releasing compositions having organovinyl polysiloxane as the main ingredient are actually prepared by mechanical emulsification which is advantageous for varying the ingredients, the mean particle diameter of the obtained emulsion and its distribution vary, and large differences in the emulsion appear according to the kind of organovinyl polysiloxane used. Hence, there is a decrease of wettability or coatability on the substrate, a deterioration of properties due to changes in the emulsion during storage, or a distinct drop in performance due to a short pot life. As a result, it was difficult to realize the original performance of the silicone, and to obtain stable target peeling properties.

### SUMMARY OF THE INVENTION

### Object of the Invention

It is therefore a first object of the present invention to provide a silicone emulsion releasing composition having a stable emulsion with good wettability, coating properties and storage stability, which excels in pot life, curing properties, releasing properties and residual adhesive properties, and also excels from the viewpoint of safety, hygiene and environmental properties.
It is a second object of the present invention to provide a releasing substrate having stable releasing properties which can meet various application demands.

### Means for Solving the Problems

The present inventions are a silicone emulsion releasing composition containing the following ingredients:
(A) 100 mass parts of the organopolysiloxane represented by the following formulas (1) and/or (2);
(B) 1-50 mass parts of an organopolysiloxane having at least three hydrogen atoms bonded directly to a silicon atom in one molecule, represented by the following formula (3);
(C) 0.5-50 mass parts of at least one organopolysiloxane containing phenyl groups selected from a group consisting of the following formulas (4)-(6);
(D) 0.5-10 mass parts of a nonionic surfactant which is a polyoxyethylene alkyl ether whose HLB is 10-15, pH is 6.5 or less and ionic conductance is 30 µS/cm or less;
(E) 1-20 mass parts of a polyvinyl alcohol having the polymerization degree of 500-4000 and wherein a 4% aqueous solution has a saponification degree of 86-98 mol%;
(F) An amount of water which permits homogeneous mixing of (A), (B), (C) and (D); and
(G) A platinum complex containing 0.001-0.05 mass parts of platinum;
   and a releasing substrate obtainable by coating and curing the silicone emulsion composition of the present invention on paper or film. 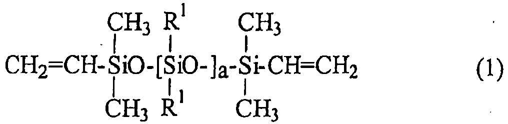 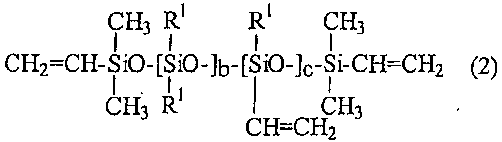 where R¹ in formulas (1) and (2) is a monovalent hydrocarbon group having 1-10 carbon atoms which does not contain an aliphatic unsaturated bond or an aromatic substituent, these R¹ being the same or different, provided that 80 mol% or more of all the R' in one molecule is methyl,
   a, b, c are integers which are selected so that 0.2-5 mol% of all the substituents directly bonded to a silicon atom are vinyl groups, and a or b + c is an integer from 20 to 600; 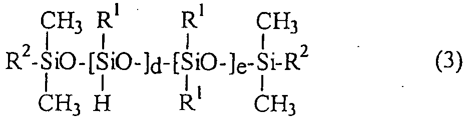 where R¹ in formula (3) is defined as R¹ above, provided that 80 mol% or more of all the R¹ in one molecule is methyl, R² may be the same or different, and is a hydrogen atom or monovalent hydrocarbon group having 1-10 carbon atoms containing no aliphatic unsaturated bond and aromatic substituent, and
   d, e are integers which are selected so that 10-50 mol% of all the substituents directly bonded to a silicon atom are hydrogen atoms, d + e is an integer from 10 to 200, d/(d+e) is 0.2 to 0.9 and e is an integer equal to 1 or more; 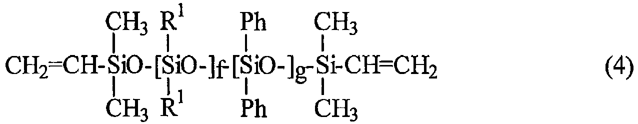 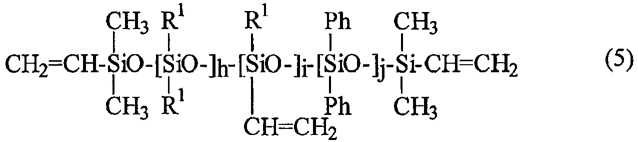 where, R¹ in the formulas (4) and (5) is defined as R¹ above, provided that 80 mol% or more of the R¹ is a methyl group, Ph is a phenyl group,
   f, g, h, i, j are integers which are selected so that 0.2-5 mol% of all the substituents directly bonded to a silicon atom are vinyl groups, 5-50 mol% are phenyl groups, and f+g or h+i+j is an integer from 20-600, i is an integer from 1-60 and g and j are integers from 1-300, 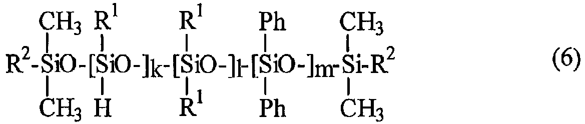
where, R¹ in formula (6) is methyl, R² is defined as R² above, provided that at least 80 mol% of the R² is a methyl group, Ph is a phenyl group, and
k, l, m are integers which are selected so that 10-50 mol% of all the substituents directly bonded to a silicon atom are hydrogen atoms and 5-50 mol% are phenyl groups, k+l+m is an integer from 10-200 and k/(k+l+m) is 0.2-0.9.

In the present invention, as the polyvinyl alcohol of the aforesaid ingredient (E), polyvinyl alcohol having a viscosity of 4-20 mPa · s and polyvinyl alcohol having a viscosity of 21-100 mPa · s in a 4% aqueous solution at 20°C are preferably used together, and the content of the phenyl group-containing organopolysiloxane of the aforesaid ingredient (C) is preferably 0.5-50 mass parts.

The platinum complex of ingredient (G) is preferably prepared as an emulsion composition having the following ingredients (G1)-(G4) as main ingredients, which are blended with an emulsion composition comprising ingredients (A)-(F) prepared independently.
(G1) 100 mass parts of a platinum complex-containing polysiloxane having a viscosity at 25°C of 10-500 mPa · s; (G2) 0.5-10 mass parts of a nonionic surfactant whereof the HLB is 6.5 or less, and the ionic conductance is below 30µS/cm; (G3) 1-20 mass parts of a polyvinyl alcohol whereof the viscosity of a 4% aqueous solution at 20°C is 4-100 mPa · s, and the saponification degree is 86-98-mol %; (G4) 370-399 mass parts of water.

The polyvinyl alcohol of the aforesaid ingredient (G3) is preferably a mixture of polyvinyl alcohols having a viscosity of 4-20 mPa · s and 21-100 mPa · s in a 4% aqueous solution at 20°C, so that the overall viscosity of a 4% aqueous solution at 20°C is 4-100 mPa · s.

### Effect of the Invention

The silicone emulsion releasing composition of the present invention is a stable emulsion with good wettability, coatability and storage stability, and not only excels in pot life, curing properties, peeling properties, and residual adhesive property, but is also advantageous from the viewpoints of safety, hygiene and environmental friendliness. Also, the releasing substrate of the present invention formed by coating and curing this composition on a substrate allows easy design of releasing properties, so it can be used in a wide variety of applications.

### Preferred Embodiments of the Invention

R¹ in the organopolysiloxane represented by the formulas (1) and (2), which is ingredient (A) used in the present invention, is a monovalent hydrocarbon group having 1-10 carbon atoms which does not contain an aliphatic unsaturated bond or aromatic substituent group, examples thereof being an alkyl group, such as methyl, ethyl, propyl, butyl, pentyl, hexyl, octyl; a cycloalkyl group such as cyclohexyl; and these monovalent hydrocarbon group wherein some or all of the hydrogen atoms bonded to the carbon atoms of these groups are substituted by a halogen atom, cyano group or alkoxy group.

The substituent R¹ in the ingredient (A) may be the same or different, but from a practical viewpoint, 80 mol% or more of all the R¹ in one molecule is methyl, and R¹ and the integers a, b, c are selected so that the viscosity of the organopolysiloxane at 25°C is 30-10,000 mPa · s. In order to satisfy this condition, a or b+c is an integer approximately from 20 to 600, but preferably an integer from 50-300, and c is preferably an integer from 1-60.

The organopolysiloxane of ingredient (A) used by the present invention is based on a straight-chain molecular structure, but to the extent that the effect of the present invention is not impaired, a branched structure may be contained in the molecule based on trifunctional siloxane units as shown by the following formula (7).

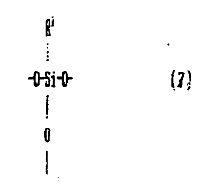

If the viscosity at 25°C of ingredient (A) exceeds 10, 000 mPa · s, and an emulsion is produced using the emulsification technology generally known in the art, the emulsion easily dissociates and stability declines, which is undesirable. Also, if the vinyl group content of the organopolysiloxane is less than 0.2 mol% , curing properties are inferior, and if it exceeds 5 mol%, peeling force is unstable.

As the aforesaid ingredient (B) used in the present invention, an organohydrogen polysiloxane having at least three hydrogen atoms bonded directly to a silicon atom per one molecule of the organohydrogen polysiloxane represented by the formula (3) is used.

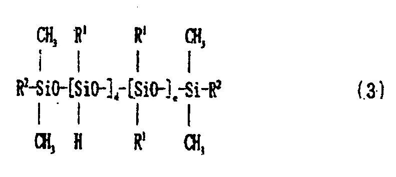

The substituent R² in formula (3) is a hydrogen atom or a monovalent hydrocarbon group having 1-10 carbon atoms which does not contain an aliphatic unsaturated bond or an aromatic substituent. As an example of such a hydrocarbon group, an alkyl group such as methyl, ethyl, propyl, butyl, pentyl, hexyl, and octyl; a cycloalkyl group such as cyclohexyl; and these monovalent hydrocarbon group wherein some or all of the hydrogen atoms combined with the carbon atoms of these groups are replaced by a halogen atom, cyano group or an alkoxy group, may be mentioned. In the present invention, the aforesaid R² in ingredient (B) is preferably also a methyl group, and from the viewpoint of practical application, at least 80 mol% of R² is a methyl group. 10-50 mol% of all the substituents bonded directly to a silicon atom are hydrogen atoms, and R¹, R², and the integers d, e are selected so that the viscosity of this organohydrogen polysiloxane at 25°C is 5-200 mPa · s.

In order to satisfy these conditions, d+e is an integer from approx. 10 to 200, and is preferably an integer from 20-150. d/ (d+e) is 0.2-0.9, and is preferably 0.4-0.8. Therefore, e must be an integer equal to 1 or more. When e is 0, the stability of the emulsion produced by emulsifying becomes very poor.

As for ingredient (B) used in the present invention, a branched structure based on a trifunctional siloxane unit, shown by the aforesaid formula (7), may be included in the molecule as in the case of ingredient (A).

As ingredient (C) used in the present invention, the organopolysiloxane represented by formulas (4)-(6) is used. The organopolysiloxane represented by formulas (4) or (5), which has a vinyl group as a functional group, functions as ingredient (A) with a phenyl group, and the organopolysiloxane represented by formula (6), which has a hydrogen atom bonded directly to a silicon atom as the functional group, functions as ingredient (B) with a phenyl group.

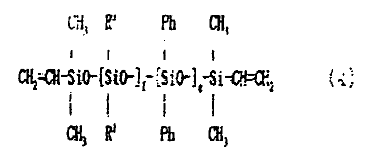

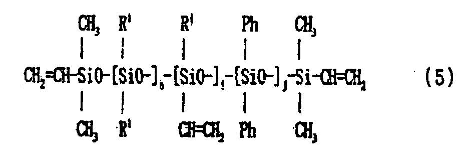

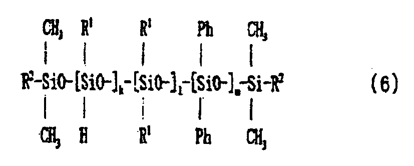

By including an organopolysiloxane having a phenyl group, it is easier to obtain a good emulsion by mechanical emulsification, and this may further improve the stability of the emulsion composition.

In the ingredient (C) used in the present invention, the phenyl group content of all the substituents bonded directly to a silicon atom is preferably 5-50 mol %. If less than 5 mol%, an effect of increasing the stability of the emulsion composition is not sufficient, and if 50 mol% is exceeded, homogeneous mixing into the composition becomes difficult and causes manufacturing problems. In the present invention, a phenyl group is industrially preferable, but from the viewpoint of effect, this phenyl group may be replaced by an aromatic group which has a substituent group, such as a tolyl group. In this case, the content of these groups relative to all the substituents is suitably adjusted.

R¹, f, g, h and i are practically selected so that 80 mol% or more of all the R¹ is methyl, and the viscosity at 25°C is from 30 to 10, 000 mPa · s. In order to satisfy this condition, f+g or h+i+j needs to be an integer from 20-600, and it is preferably an integer from 50-300. i is an integer from 1-60, and g, j are integers from 1-300.
R¹, R² and k, l, m are selected from a practical viewpoint so that all the R¹ and more than 80 mol% of R² are methyl, 10-50 mol% of all groups bonded directly to silicon are hydrogen atoms, and the viscosity at 25°C is 5-200 mPa · s. In order to satisfy these conditions, k+l+m must be an integer from 10-200, and is preferably an integer from 20-150. k/(k+l+m) is 0.2-0.9, and is preferably 0.4-0.8.

In general, the surface tension of silicone becomes higher the larger the phenyl group content in the silicone like ingredient (C), and the solubility in ingredients (A) and (B) that do not contain a phenyl group becomes lower.
If the phenyl group content of ingredient (C) exceeds 50 mol%, the dissociation tendency of the ingredient (C) becomes more marked and the emulsion is also impaired. Therefore, in the present invention, it is thought to be advantageous to mix ingredients of different surface tension together, to the extent that they do not dissociate, which also improves the stability of the obtained emulsion. In practice, if a comparison is made between a liquid obtained by mixing only ingredient (A) and ingredient (B), and a liquid obtained by adding ingredient (C) thereto and stirring, it has been observed that bubbles easily form in the latter case and do not easily disappear, hence it is reasonable to assume that ingredient (C) acts like a surfactant.

Regarding the emulsion of the present invention, when the surfactant which is ingredient (D) and the PVA emulsification assistant which is ingredient (E) are present near the boundary between the silicone particles and water, emulsification is promoted and good emulsion stability is maintained. Therefore, it is thought that when the silicone contains a bulky hydrophobic organic group like a phenyl group to a suitable extent, this phenyl group strengthens the interaction with the hydrophobic groups of the surfactant, and the surfactant near the surface of the silicone particles is held more strongly, so that the emulsion become more stable.

The ingredient (C) has a vinyl group or a hydrogen group bonded directly to a silicon atom as a functional group. By reacting with other siloxanes via these functional groups, they can be held in the film when a cured film is formed, so bleed-out can be prevented. Conversely, even if a phenyl group-containing siloxane which does not have these functional groups is used, the effect of increasing the stability of the emulsion composition of the present invention is obtained, but in order to decrease bleed-out to a practically useful level as a cured film, its blending amount must be drastically reduced, so it cannot be expected to contribute to improvement in the stability of the emulsion composition. The amount of the functional groups and viscosity of the ingredient (C) are in the same range as in the case of the corresponding ingredient (A) and ingredient (B).

In the nonionic surfactant of the present invention, which is used as ingredient (D), HLB should be 10-15, the pH should be 6.5 or less, and the ionic conductance should be 30µS/cm or less. This ingredient (D) is used to emulsify a mixture consisting of the aforesaid ingredient (A), ingredient (B), ingredient (C) and water as ingredient (F). The ingredient (G2) which is used to emulsify the platinum compound (G1), when ingredient (G) is used as the emulsion composition, is also substantially the same as this ingredient (D).

Examples of a nonionic surfactant used by the present invention are polyoxyethylene lauryl ether and polyoxyethylene tridecyl ether.

In the present invention, if a surfactant other than one for which the HLB is 10-15, the pH is 6.5 or less, and the ionic conductance is 30 µS/cm or less is used, the prepared emulsion composition deteriorates with time. A cationic and an anionic surfactant can also be used together in amounts which do not impair the effect of the emulsion composition of the present invention. By suitably using a cationic and an anionic surfactant, it is possible to obtain an improvement in the wettability or leveling properties of the emulsion.

The polyvinyl alcohol (hereafter, PVA) used as ingredient (E) in the present invention is required to have a saponification degree of 86-98 mol%, and the viscosity of a 4% aqueous solution at 20°C should be 4-100 mPa · s. This PVA is an indispensable ingredient as an assistant to promote emulsification with the surfactant which is ingredient (D), and stabilizes the formed emulsion. If the saponification degree is less than 85 mol% or more than 99 mol %, the emulsion stabilizing effect is inadequate. Also, if the viscosity of a 4% aqueous solution at 20°C is less than 3 mPa · s, the emulsion stabilizing effect is poor, while if it exceeds 100mPa · s, the coating properties of the emulsion deteriorate. The polymerization degree of PVA whereof the viscosity of a 4% aqueous solution at 20°C is 4-100 mPa · s, is equivalent to approx. 500 to 4,000.

When preparing the emulsion of the present invention by the mechanical emulsifying method, the use of plural types of PVA whereof the viscosity of a 4% aqueous solution at 20°C is different, rather than the use of one PVA alone, makes it possible to obtain a stable emulsion easily. In the present invention, the concurrent use of PVA of a low polymerization degree and a high polymerization degree, such as PVA having a viscosity in 4% aqueous solution at 20°C of 4-20 mPa · s and PVA of 21-100 mPa · s, is preferred. In the present invention, since the optimal polymerization degree of PVA for emulsification varies according to the structure of ingredient (A) which is a main ingredient, if emulsification is performed using only one PVA, whenever the structure of ingredient (A) changes, the emulsion changes, and stability is affected. It can thus by expected that, by using PVA of different polymerization degrees together, the effect of the structure of ingredient (A) on the emulsion is mitigated, and stability will be improved.

In the present invention, the ingredient (G3) which is used to emulsify the platinum compound (G1), when blending ingredient (G) is used as the emulsion composition, is also substantially the same as the ingredient (E) described above. As ingredient (F), water is used as in the case of ingredient (G4).

As ingredient (G) used in the present invention, a platinum complex (complex of polysiloxane with platinum or with a platinum compound; or a complex salt of chloroplatinic acid and various olefins etc.), is used. This ingredient (G) is used as a catalyst for performing an addition reaction of the aforesaid ingredient (A), ingredient (B), and ingredient (C). When blending an emulsion composition which comprises the ingredients (G1), (G2), (G3), and (G4), a platinum complex-containing polysiloxane is preferably used as the platinum complex. For this platinum complex-containing polysiloxane, the viscosity at 25°C is preferably 10-500 mPa · s.

The advantage of blending ingredient (G) as an emulsion composition of the present invention is that ingredient (G) can be easily, rapidly and uniformly dispersed in the emulsion composition comprising ingredients (A)-(F), and as a result, a stable, cured film with good performance can be obtained. There is also the advantage that it is effective to improve the shelf life or pot life of the emulsion of the present invention. Also, the ingredient (G1) may be emalsified by using a surfactant as ingredient (G2) and a PVA as ingredient (G3), respectively, these being of the same type and amount used to prepare the emulsion composition of ingredients (A)-(F), whereby manufacturing is much easier, and this advantage can strengthen a good effect of the present invention.

The blending amounts of ingredients (B)-(G) when ingredient (A) is 100 mass parts, are as follows.
The blending amount of the organohydrogen polysiloxane which is ingredient (B), is the amount at which the molar number of hydrogens directly bonded to a silicon atom is 1 to 10 times, but preferably 1 to 5 times, the molar number of vinyl groups contained in the whole composition, and from the viewpoint of cured film formation and peeling properties, it is 1-50 mass parts.

The blending amount of the phenyl group-containing organopolysiloxane which is ingredient (C), is 0.5-50 mass parts to provide more emulsion stability. If it is less than 0.5 mass parts, the effect of stabilizing the emulsion composition is low, and if it exceeds 50 mass parts, the releasing properties of the cured film will decline.

The blending amount of the nonionic surfactant which is ingredient (D) is 0.5-10 mass parts, and preferably 1-7 mass parts. If the blending amount is less than 0.5 mass parts, it is difficult to emulsify, and also the stability of the emulsion obtained is insufficient. On the other hand, if the blending amount of the nonionic surfactant exceeds 10 mass parts, not only the curing properties and residual adhesion rate of the emulsion fall remarkably, but also it may have an adverse effect on adhesive materials in contact with the cured film manufactured from the emulsion composition.

The blending amount of PVA which is ingredient (E) in the present invention is within the limits of 1-20 mass parts. If the blending amount is less than 1 mass part, not only is emulsifying difficult, but also the stability of the emulsion obtained is insufficient. On the other hand, if the blending amount exceeds 20 mass parts, the releasing properties of the cured film fall.

The blending amount of water which is ingredient (F) does not directly affect the present invention, but should be the amount required to adjust the solid content of the composition to the desired range, in particular, 80-1, 000 mass parts. Also, the water should be an amount which permits homogeneous mixing of the organopolysiloxane comprising the ingredient (A), ingredient (B), and ingredient (C), and the emulsifier which is ingredient (D), and its blending amount may be suitably adjusted in consideration thereof.

The addition amount of the platinum complex which is ingredient (G) in the present invention is an amount which is equivalent to 0.001 to 0.05 mass parts in terms of mass of platinum. When using a platinum complex-containing polysiloxane, the blending amount is also decided on the same basis. If the blending amount of ingredient (G) is less than 0.001 mass parts, curing properties decline, while if it exceeds 0.05 mass parts, the pot life is insufficient and it is also economically disadvantageous.

If ingredient (G) is used as an emulsion composition, the platinum complex comprising the following ingredients (G1)-(G4) is preferred.
(G1) 100 mass parts of a platinum complex-containing polysiloxane having a viscosity at 25°C of 10-500 mPa · s,
(G2) 0.5-10 mass parts of a nonionic surfactant whereof the HLB is 6.5 or less, and the ionic conductance is below 30µS/cm,
(G3) 1-20 mass parts of polyvinyl alcohol whereof the viscosity of a 4% aqueous solution at 20°C is 4-100 mPa · s, and the saponification degree is 86-98-mol%,
(G4) 370-399 mass parts of water.
In this way, the effective constituents of the platinum complex-containing polysiloxane are adjusted to within the desired range.

The emulsion composition of the present invention is obtained by uniformly mixing a predetermined amount of ingredients (A)-(G), and emulsifying with a homogenizer, but from the viewpoint of handling, it is convenient to emulsify ingredients other than the ingredient (G) beforehand, and add the ingredient (G) just before use. Also, in order to enhance dispersibility, it is preferred to add the ingredient (G) as an emulsion composition which has been emulsified by the same method as used for emulsification of ingredients (A)-(F).

Various kinds of additives may be blended with the emulsion composition of the present invention in a range which does not impair the effect of the present invention. For example, to inhibit the activity of the platinum complex catalyst, and extend the pot life if required, various inhibiting agents such as organic nitrogen compounds, organophosphorous compounds and acetylene compounds may be added if required. For example, as a preservative, sorbic acid, sorbic acid salts or acetic acid may be added; to prevent permeability to the porous substrate or to realize heavy peeling force, a water soluble resin, such as methyl cellulose and sodium carboxymethylcellulose may be added; to improve leveling during coating, a leveling agent or a small amount of solvent may be added; and as a slidability conferring agent, a small amount of nonreactive organopolysiloxane may also be added.

The emulsion composition of the present invention may be applied to a substrate by the known methods, i.e., roll coating, gravure coating, air knife coating, wire coating, doctor coating or brush coating.

The emulsion composition of the present invention forms a cured film having desirable releasing properties by coating the composition to a thickness of 0.1-5 g/m² in terms of solids on a flexible thin film material which is paper or film, and forming a cured film which has desirable releasing properties using a heating roller, heating drum, or recirculating hot air drier for 5 seconds-3 minutes at 80-200°C. The releasing substrate of the present invention can be easily manufactured thereby.

Next, the present invention will be further described in further detail by means of examples, but the invention is not limited thereby. In particular, the viscosity in the examples and comparative examples is a value measured at 25°C, unless otherwise stated. The emulsion properties (appearance, centrifugal separation test), shelf life, pot life, curing properties, releasing properties (peeling force) and residual adhesion (residual adhesion rate) of the products of the present invention and comparison products were estimated by the methods shown below, and the results are shown in Tables 1-3.

### Appearance

A prepared emulsion (hereafter, Em) composition comprising a main material and prepared platinum complex-containing polysiloxane emulsion composition, respectively, were observed visually. A uniform, milky white color was designated by ○, an oily emulsion was designated by △, and a separated material was designated by ×.

### Centrifugal separation test

The prepared emulsion composition comprising a main material and prepared platinum complex-containing polysiloxane emulsion were placed in a centrifuge at 3000 rpm for 10 minutes, respectively, and nonvolatile matter was measured after leaving the upper layer or lower layer of each at 105°C for 3 hours. Emulsions for which the difference of measured values between the upper layer and the lower layer was 5% or less and were very stable were designated by ○, those for which the difference of measured values was 2% or less and had excellent stability were designated by ⊚, those for which the difference of measured values was more than 5% and less than 10%, were designated by △, and those for which the difference exceeded 10% were designated by ×.

### Coating and curing properties

A silicone emulsion releasing composition obtained by mixing 100 mass parts of the emulsion composition comprising a main material, and 2 mass parts of a platinum complex-containing polysiloxane emulsion, were applied with a wire bar at about 1.0 g/m² in terms of silicone solids content to the surface of a glassine paper (basis weight 60 g/m²), treated in a hot air recirculation drier at 150°C for 20 seconds to form a cured film, and the coating and curing properties were evaluated as follows.
Coating properties: The appearance of the cured film was observed visually. A good film was designated by ○, a smooth, beautiful film was designated by ⊚, and a film with unnaturalness such as cloud, cissing or orange peel skin was designated by ×.
Curing properties: When a coated surface was rubbed with the finger, a cured film which still had a good surface was designated by ○, and a film with dropout or bloom was designated by ×. Tests were performed within 1 hour after preparing the treatment bath of the composition.

### Peeling force

A silicone emulsion releasing composition obtained by mixing 100 mass parts of an emulsion composition comprising a main material, and 2 mass parts of a platinum complex-containing polysiloxane emulsion, were applied at about 1.0 g/m² in terms of silicone solids content to the surface of a glassine paper (basis weight 60 g/m²), and treated in a hot air recirculation drier at 170°C for 30 seconds to form a cured film. Next, an acrylic solvent type adhesive BPS-5127 (trade name TOYO INK MFG. CO., LTD.) was applied to this cured film surface, heat-treated at 100°C for 3 minutes, and a woodfree paper of 64 g/m² was stuck onto this treated surface. The obtained sheet was aged at 25°C for 20 hours, and cut to a width of 5 cm to produce a test specimen. For this specimen, the woodfree paper was pulled at an angle of 180 degrees and a peeling rate of 0.3 m/in using a peel testing machine, and the force (N) required for peeling was measured.

### Residual adhesion rate

A cured film was formed in the same way as for the peeling test. A polyester tape (trade name NITTO 31B: NITTO DENKO CORP.) was stuck to this cured film surface, heat-treated at 70°C for 20 hours while applying a load of 20 g/cm², the polyester tape (width 25 mm) was peeled off, and the cured film surface was stuck on a stainless plate. Next, this tape was pulled at an angle of 180 degrees and a peeling rate of 0.3 m/in using a peel testing machine, and the force (N) required for peeling was measured.
On the other hand, a polyester tape (NITTO 31B) was pasted to a Teflon board, heat-treated at 70°C for 20 hours while applying a load of 20 g/cm², the polyester tape (width 25 mm) was peeled off, and the cured film surface was stuck on a stainless plate in the same way. The force (N) required for peeling was measured in the same way. The ratio of the former force with respect to the latter force expressed as a percentage, was taken as the residual adhesion rate.

### Pot life

A silicone emulsion releasing composition obtained by mixing 100 mass parts of an emulsion composition comprising a main material, and 2 mass parts of a platinum complex-containing polysiloxane emulsion, was left at 25°C for 24 hours. The appearance, coating properties, curing properties and residual adhesion rate were evaluated. Compositions for which the external appearance was rated as ○-△, the coating properties were rated as⊚-○, the curing properties were rated as ○, and for which the decline in residual adhesion rate was 10% or less as compared with the initial value, were designated by ○, and the others were designated by ×.

### Shelf life

A silicone emulsion composition comprising a main material, and a platinum complex-containing polysiloxane emulsion, were tightly stoppered respectively, and left at 25°C for 6 months. An evaluation was performed by external appearance and a centrifuge test. Emulsions for which the external appearance was rated as ○-△ and the centrifuge test was rated as⊚-△ were designated by ○, and the others were designated by ×.

### Preparation of emulsion composition comprising main material

Table 1 shows the blending proportions corresponding to the following preparation examples, together with the results of external appearance, a centrifuge test and shelf life of the obtained emulsion compositions comprising a main material.

### Preparation Example 1

(A) 100 mass parts of methylvinyl polysiloxane wherein the two ends of the chain are blocked by a dimethylvinyl silyl group, having only dimethylsiloxane units, and having a viscosity of 500 mPa · s (vinyl group content; 0.6 mol %);
(B) 3 mass parts of methylhydrogen polysiloxane wherein the two ends of the chain are blocked by a trimethylsilyl group, having dimethylsiloxane units and methylhydrogensiloxane units, and having a viscosity of 50 mPa · s (hydrogens directly bonded to silicon atoms: 35 mol %);
(C) not used;
(D) 2 mass parts of polyoxyethylene alkyl ether surfactant (HLB 13.6, pH 5.4 and ionic conductance 9.8µS/cm);
(E) 2.5 mass parts each of a polyvinyl alcohol having a saponification degree of 90 mol% whereof the viscosity of a 4% aqueous solution at 20°C is 15 mPa · s, and a polyvinyl alcohol having a saponification degree of 90 mol% whereof the viscosity of a 4% aqueous solution at 20°C is 50 mPa · s; and
(F) 412 mass parts of water,
were introduced into a vessel together with 0.5 mass parts of ethynylcyclohexanol as a reaction inhibitor, mixed by a homomixer, and a homogeneous emulsion composition was obtained using a homogenizer. The silicone content of this composition was 20 mass %, and its viscosity was 50 mPa · s.

### Preparation Example 2

An emulsion composition of Preparation Example 2 was prepared in the same way as that of Preparation Example 1, except that as ingredient (C) which was not used for the emulsion composition of the Preparation Example 1 comprising a main material, 10 mass parts of methylvinylphenylpolysiloxane wherein the two ends of the chain are blocked by dimethylvinylsilyl groups, having dimethyl siloxane units and diphenyl siloxane units, and having a viscosity of 50 mPa · s (vinyl group content: 1 mol%, phenyl group content: 40 mol%), as ingredient (E), 5 mass parts of a polyvinyl alcohol having a saponification degree of 90 mol% whereof the viscosity of a 4% aqueous solution at 20°C is 30 mPa · s, and as ingredient (F), 415 mass parts of water, were used.

### Preparation Example 3

An emulsion composition of Preparation Example 3 was prepared in the same way as that of Preparation Example 1, except that instead of ingredient (B) used in Preparation Example 1, 10 mass parts of methylhydrogenpolysiloxane wherein the two ends of the chain are blocked by trimethylsilyl groups, having dimethylsiloxane units and methylhydrogen siloxane units, and having a viscosity of 50 mPa · s (hydrogens directly bonded to silicon atoms: 35 mol %), as ingredient (C) which was not used in Preparation Example 1, 40 mass parts of methylvinylphenylpolysiloxane wherein the two ends of the chain are blocked by dimethylvinylsilyl groups, having dimethylsiloxane units, methylvinylsiloxane units and diphenylsiloxane units, and having a viscosity of 5,000 mPa · s (vinyl group content: 4 mol%, phenyl group content: 7 mol%), as ingredient (E), 5 mass parts of a polyvinyl alcohol having a saponification degree of 90 mol% whereof the viscosity of a 4% aqueous solution at 20°C is 30 mPa · s, and as ingredient (F), 600 mass parts of water, were used.

### Preparation Example 4

An emulsion composition of Preparation Example 4 was prepared in the same way as that of Preparation Example 1, except that instead of ingredient (B) used in Preparation Example 1, 2 mass parts of methylhydrogen polysiloxane wherein the two ends of the chain are blocked by trimethylsilyl groups, having dimethyl siloxane units and methylhydrogen siloxane units, and having a viscosity of 50 mPa · s (hydrogens directly bonded to silicon atoms: 35 mol %), as ingredient (C) which was not used in Preparation Example 1, 2 mass parts of methylhydrogenphenylpolysiloxane wherein the two ends of the chain are blocked by trimethylsilyl groups, having dimethylsiloxane units, methylvinylsiloxane units and diphenylsiloxane units, and having a viscosity of 100 mPa · s (hydrogens directly bonded to silicon atoms: 20 mol%, phenyl group content: 20 mol%), as ingredient (E), 5 mass parts of a polyvinyl alcohol having a saponification degree of 90 mol% whereof the viscosity of a 4% aqueous solution at 20°C is 30 mPa · s, and as ingredient (F), 416 mass parts of water, were used.

### Preparation Example 5

An emulsion composition of Preparation Example 5 was prepared in the same way as that of Preparation Example 1, except that instead of ingredient (A) used in Preparation Example 1, 40 mass parts of methylvinyl polysiloxane wherein the two ends of the chain are blocked by dimethylvinylsilyl groups, having only dimethylsiloxane units, and having a viscosity of 50 mPa · s (vinyl group content: 2.5 mol%), and 60 mass parts of methylvinylphenylpolysiloxane wherein the two ends of the chain are blocked by dimethylvinylsilyl groups, having dimethylsiloxane units and methylvinylsiloxane units, and having a viscosity of 8,000 mPa · s (vinyl group content: 1 mol%), as ingredient (B), 8 mass parts of methylhydrogen polysiloxane wherein the two ends of the chain are blocked by trimethylsilyl groups, having dimethylsiloxane units and methylhydrogensiloxane units, and having a viscosity of 50 mPa · s (hydrogens directly bonded to silicon atoms: 35 mol%), as ingredient (C) which was not used in Preparation Example 1, 10 mass parts of methylvinylphenylpolysiloxane wherein the two ends of the chain are blocked by dimethylvinylsilyl groups, having dimethylsiloxane units, methylvinylsiloxane units and diphenylsiloxane units, and having a viscosity of 200 mPa · s (vinyl group content: 1 mol%, phenyl group content: 10 mol%), and as ingredient (F), 472 mass parts of water, were used.

### Preparation Example 6 (comparison)

An emulsion composition of Preparation Example 6 was prepared in the same way as that of Preparation Example 1, except that ingredient (E) used in Example 1 was not used, and as ingredient (F), 417 mass parts of water was used.

### Preparation Example 7 (comparison)

An emulsion composition of Preparation Example 7 was prepared in the same way as that of Preparation Example 1, except that instead of ingredient (E) used in Example, 5 mass parts of a polyvinyl alcohol having a saponification degree of 70 mol% whereof the viscosity of a 4% aqueous solution at 20°C is 30 mPa · s, and as ingredient (F), 412 mass parts of water, were used.

### Preparation Example 8 (comparison)

An emulsion composition of Preparation Example 8 was prepared in the same way as that of Preparation Example 1, except that instead of ingredient (B) used in Preparation Example 1, 5 mass parts of methylhydrogen polysiloxane wherein the two ends of the chain are blocked by trimethylsilyl groups, having dimethylsiloxane units and methylhydrogensiloxane units, and having a viscosity of 50 mPa · s (hydrogens bonded directly to silicon atoms: 35 mol%), as ingredient (C) which was not used in Preparation Example 1, 60 mass parts of methylvinylphenylpolysiloxane wherein the two ends of the chain are blocked by dimethylvinylsilyl groups, having dimethylsiloxane units and diphenylsiloxane units, and having a viscosity of 50 mPa · s (vinyl group content: 1 mol%, phenyl group content: 40 mol%), as ingredient (E), 5 mass parts of a polyvinyl alcohol having a saponification degree of 70 mol% whereof the viscosity of a 4% aqueous solution at 20°C is 30 mPa · s, and as ingredient (F), 660 mass parts of water, were used.

**Table 1**

| Mixed Ingredients | Preparation Ex.1 | Preparation Ex.2 | Preparation Ex.3 | Preparation Ex.4 | Preparation Ex.5 | Preparation Ex.6 | Preparation Ex.7 | Preparation Ex.8 |
|---|---|---|---|---|---|---|---|---|
| Ingredient (A) | 100 | 100 | 100 | 100 | 40/60 | 100 | 100 | 100 |
| Viscosty mPa·s | 500 | 500 | 200 | 500 | 50/8000 | 500 | 500 | 500 |
| Vi mol% | 0.6 | 0.6 | 1 | 0.6 | 2.5/1 | 0.6 | 0.6 | 0.6 |
| Ingredient (B) | 3 | 3 | 10 | 2 | 8 | 3 | 3 | 5 |
| H mol% | 35 | 35 | 35 | 35 | 35 | 35 | 35 | 35 |
| Ingredient (C) | 0 | 10 | 40 | 2 | 10 | 0 | 0 | 60 |
| Viscosty mPa·s | - | 50 | 8000 | 100 | 200 | - | - | 50 |
| Ph mol% | - | 40 | 7 | 20 | 10 | - | - | 40 |
| Vi mol% | - | 1 | 4 | - | 1 | - | - | 1 |
| H mol% | - | - | - | 20 | - | - | - | - |
| Ingredient (D) | 2 | 2 | 2 | 2 | 2 | 2 | 2 | 2 |
| Ingredient (E) | 2.5/2.5 | 5 | 5 | 5 | 2.5/2.5 | 0 | 5 | 5 |
| Viscosty mPa·s | 15/50 | 30 | 30 | 30 | 15/50 | - | 30 | 30 |
| Saponification Degree | 90 | 90 | 90 | 90 | 90 | - | 70 | 90 |
| Ingredient (F) (water) | 412 | 415 | 600 | 416 | 472 | 417 | 412 | 660 |
| Appearance | ○ | ○ | ○ | ○ | ○ | ○ | ○ | ○ |
| Centrifugation Test | ○ | ○ | ○ | ○ | ⊚ | × | △ | △ |
| Shelf Life | ○ | ○ | ○ | ○ | ○ | × | × | ○ |

### Preparation of platinum complex-containing polysiloxane

### emulsion composition

Table 2 shows the blending proportions in the following Preparation Examples 9 and 10, and the external appearance, results of a centrifugation test and shelf life of the obtained platinum complex-containing polysiloxane emulsion composition.

### Preparation Example 9

As ingredient (G1), 100 mass parts of a platinum-vinylsiloxane complex salt (platinum content expressed as platinum, 5000 ppm);
As ingredient (G2), 2 mass parts of a polyoxyethylenealkylether surfactant (HLB 13.6, pH 5.4 and ionic conductance 9.8µS/cm);
As ingredient (G3), 5 mass parts of polyvinyl alcohol having a saponification degree of 90 mol% whereof the viscosity of a 4% aqueous solution at 20°C is 30 mPa · s; and
As ingredient (G4), 393 mass parts of water, were mixed in a homomixer, and a homogeneous platinum complex-containing emulsion composition was obtained using a homogenizer.

### Preparation Example 10

The platinum complex-containing polysiloxane emulsion composition of Example 10 was prepared in the same way as that of Preparation Example 9, except that instead of ingredient (G3) used for the Preparation Example 9, 2.5 mass parts each of a polyvinyl alcohol having a saponification degree of 90 mol whereof the viscosity of a 4% aqueous solution at 20°C is 15 mPa · s, and a polyvinyl alcohol having a saponification degree of 90 mol% whereof the viscosity of a 4% aqueous solution at 20°C is 50 mPa · s, were used, and as ingredient (G4), 393 mass parts of water was used.

**Table 2**

| Mixed Ingredients | Preparation Ex.9 | Preparation Ex.10 |
|---|---|---|
| Ingredient (G1) | 100 | 100 |
| Ingredient (G2) | 2 | 2 |
| Ingredient (G3) | 5 | 2.5/2.5 |
| Viscosty mPa·s | 30 | 15/50 |
| Saponification Degree | 90 | 90 |
| Ingredient (G4) | 393 | 393 |
| Appearance | ○ | ○ |
| Centrifugation Test | ○ | ○ |
| Shelf Life | ○ | ○ |

### Preparation and evaluation of silicone emulsion releasing compositions

Releasing silicone emulsion compositions used for the examples and comparative examples were prepared according to the proportions shown in Table 3, by blending 2 mass parts of the platinum complex-containing polysiloxane emulsion composition with 100 mass parts of the emulsion composition comprising a main material, and stirring homogeneously. The obtained silicone emulsion releasing composition was evaluated for pot life, coating properties, curing properties, releasing properties and residual adhesion rate. Table 3 shows the results. Main Em means an emulsion comprising main ingredients, and platinum Em means a platinum emulsion.

**Table 3**

| Combination of Ingredients | Comp Ex.1 | Ex.1 | Ex.2 | Ex.3 | Ex.4 | Comp. Ex.2 | Comp. Ex.3 | Comp. Ex.4 | Comp. Ex.5 |
|---|---|---|---|---|---|---|---|---|---|
| Main Em | 1 | 2 | 3 | 4 | 5 | 1 | 6 | 7 | 8 |
| Platinum Em | 9 | 9 | 9 | 9 | 9 | 10 | 9 | 9 | 9 |
| Coating Property | ○ | ○ | ○ | ○ | ⊚ | ⊚ | × | ○ | × |
| Curing Property | ○ | ○ | ○ | ○ | ○ | ○ | ○ | ○ | ○ |
| Peeling Force (N) | 0.5 | 1.8 | 4.2 | 0.8 | 1.5 | 0.5 | 0.7 | 0.7 | × |
| Residual Adhesion Rate | 90 | 90 | 90 | 90 | 95 | 95 | 85 | 90 | 75 |
| Pot Life | ○ | ○ | ○ | ○ | ○ | ○ | × | × | × |

| | | | | | | | | | |
|---|---|---|---|---|---|---|---|---|---|
| Notes: Where the peeling force is ×, it means that peeling was not possible. | | | | | | | | | |

As is clear from the results of Tables 1-3, all the emulsion compositions comprising the main ingredients and the platinum complex-containing polysiloxane emulsion composition according to the present invention had good stability, so a silicone emulsion releasing composition was easily prepared. In addition, the obtained silicone emulsion releasing composition of the present invention also gave a stable emulsion having good coating properties, as well as excellent pot life, curing properties, releasing properties and residual adhesive properties.

### Industrial applicability

The silicone emulsion releasing composition of the present invention is a stable emulsion, which not only has good wettability, coating properties and storage stability, together with excellent pot life, curing properties, releasing properties and residual adhesive properties, but also excels from the viewpoint of safety, hygiene and environmental friendliness, so it has great industrial usefulness.

## Claims

1. A silicone emulsion releasing composition comprising the following ingredients:
(A) 100 mass parts of the organopolysiloxane represented by the following formulas (1) and/or (2);
(B) 1-50 mass parts of an organopolysiloxane having at least three hydrogen atoms bonded directly to a silicon atom in one molecule, represented by the following formula (3);
(C) 0.5-50 mass parts of at least one organopolysiloxane containing phenyl groups selected from the following formulas (4)-(6);
(D) 0.5-10 mass parts of a nonionic surfactant which is a polyoxyethylene alkyl ether whose HLB is 10-15, pH is 6.5 or less and ionic conductance is 30 µS/cm or less;
(E) 1-20 mass parts of a polyvinyl alcohol having the polymerization degree of 500-4000 and wherein a 4% aqueous solution has a saponification degree of 86-98 mol%;
(F) an amount of water which permits homogeneous mixing of (A), (B), (C) and (D); and
(G) a platinum complex comprising 0.001-0.05 mass parts of platinum, 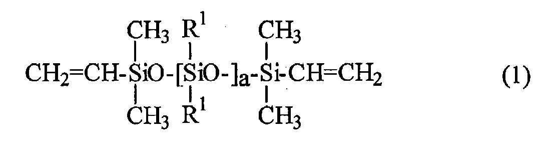 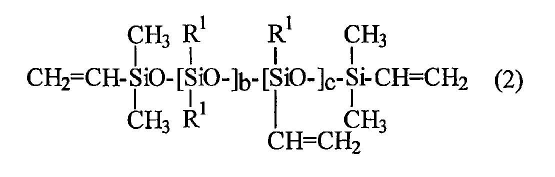 where R¹ in formulas (1) and (2) is a monovalent hydrocarbon group having 1-10 carbon atoms which does not contain an aliphatic unsaturated bond or an aromatic substituent, these R¹ being the same or different, provided that 80 mol% or more of all the R¹ in one molecule is methyl,
a, b, c are integers which are selected so that 0.2-5 mol% of all the substituents directly bonded to a silicon atom are vinyl groups, and a or b + c is an integer from 20 to 600; 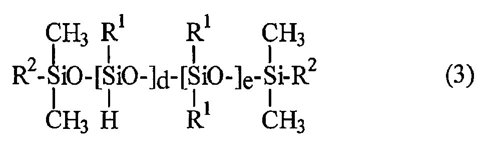 where R¹ in formula (3) is defined as R¹ above, provided that 80 mol% or more of all the R¹ in one molecule is methyl,
R² may be the same or different, and is a hydrogen atom or monovalent hydrocarbon group having 1-10 carbon atoms containing no aliphatic unsaturated bond and aromatic substituent, provided that at least 80 mol% of R² is a methyl group, and
d, e are integers which are selected so that 10-50 mol% of all the substituents directly bonded to a silicon atom are hydrogen atoms, d + e is an integer from 10 to 200, d/(d+e) is 0.2 to 0.9 and e is an integer equal to 1 or more; 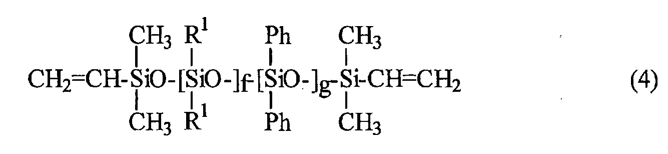 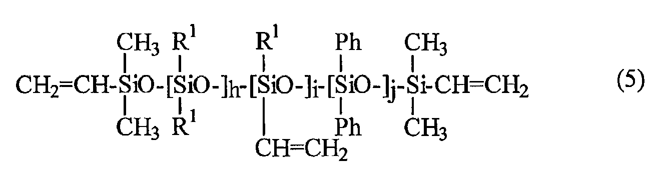 where R¹ in the formulas (4) and (5) is defined as R¹ above, provided that 80 mol% or more of the R¹ is a methyl group,
Ph is a phenyl group,
f, g, h, i, j are integers which are selected so that 0.2-5 mol% of all the substituents directly bonded to a silicon atom are vinyl groups, 5-50 mol% are phenyl groups, and f + g or h + i + j is an integer from 20-600, i is an integer from 1-60 and g and j are integers from 1-300, 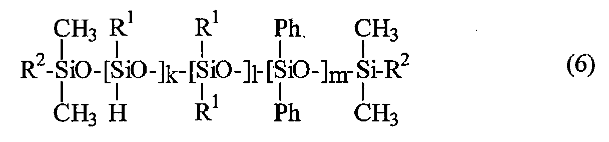 where R¹ in formula (6) is methyl,
R² is defined as R² above, provided that at least 80 mol% of R² is a methyl group, Ph is a phenyl group, and
k,l,m are integers which are selected so that 10-50 mol% of all the substituents directly bonded to a silicon atom are hydrogen atoms and 5-50 mol% are phenyl groups, k + 1 + m is an integer from 10-200 and k/(k + 1 + m) is 0.2-0.9.

2. A composition according to claim 1, wherein the amount of organohydrogen polysiloxane which is ingredient (B) is such that the molar ratio of hydrogen directly bonded to silicon atoms is 1-10 times the molar ratio of vinyl groups contained in the whole composition.

3. A composition according to claim 1 or 2, wherein said nonionic surfactant is polyoxyethylene lauryl ether or polyoxyethylene tridecyl ether.

4. A composition according to any of claims 1 to 3, wherein, as the polyvinyl alcohol of the ingredient (E), plural types of polyvinyl alcohol are used together.

5. A composition according to any of claims 1 to 4, wherein the platinum complex of said ingredient (G) is prepared as an emulsion composition having the following ingredients (G1)-(G4) as main ingredients, which are blended with an emulsion composition comprising ingredients (A)-(F) prepared independently:
(G1) 100 mass parts of a platinum complex-containing polysiloxane;
(G2) 0.5-10 mass parts of a nonionic surfactant as defined in claim 1;
(G3) 1-20 mass parts of a polyvinyl alcohol as defined in claim 1 or 4;
(G4) 370-399 mass parts of water.

6. A composition according to claim 1, wherein the amount of water as ingredient (F) is 80-1000 mass parts.

7. A releasing substrate obtainable by coating and curing the silicone emulsion composition defined in any of claims 1 to 4 on paper or film.

## Patentansprüche

1. Silikonemulsion-Antihaftzusammensetzung, welche die nachfolgenden Bestandteile enthält:
(A) 100 Massenteile einer durch die nachfolgenden Formeln (1) und/oder (2) wiedergegebenen Organopolysiloxans,
(B) 1 - 50 Massenteile eines Organopolysiloxans mit wenigstens drei Wasserstoffatomen, welche direkt an ein Silikonatom in einem Molekül gebunden sind, wobei das Organopolysiloxan durch die nachfolgende Formel (3) dargestellt ist,
(C) 0,5 - 50 Massenteile wenigstens eines Organopolysiloxans, welches Phenylgruppen enthält und aus den nachfolgenden Formeln (4) bis (6) ausgewählt ist,
(D) 0,5 - 10 Massenteile eines nichtionischen Tensids, welches ein Polyoxyethylenalkylether ist, dessen HLB 10 bis 15 beträgt, dessen pH-Wert 6,5 oder weniger beträgt und dessen Ionenleitfähigkeit 30 µS/cm oder weniger beträgt,
(E) 1 - 20 Massenteile eines Polyvinylalkohols mit einem Polymerisationsgrad von 500 bis 4.000, wobei eine 4 %-ige wässrige Lösung einen Verseifungsgrad von 86 bis 98 Mol-% aufweist,
(F) eine Menge an Wasser, welche ein homogenes Vermischen von (A), (B), (C) und (D) erlaubt, und
(G) einen Platinkomplex, welcher 0,001 - 0,05 Massenteile Platin enthält, 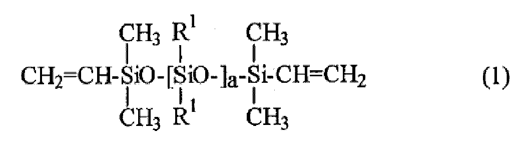 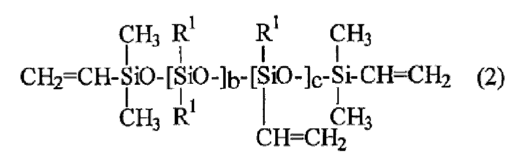 wobei R¹ in den Formeln (1) und (2) eine monovalente Kohlenwasserstoffgruppe mit 1 bis 10 Kohlenstoffatomen ist, welche keine aliphatische ungesättigte Bindung und keinen aromatischen Substituenten enthält, wobei R¹ gleich oder verschieden voneinander sind, vorausgesetzt, dass 80 Mol-% oder mehr von allen R¹ in einem Molekül Methyl sind,
a, b, c ganze Zahlen sind, welche so ausgewählt sind, dass 0,2 - 5 Mol-% aller Substituenten, die direkt an ein Siliciumatom gebunden sind, Vinylgruppen sind, und a oder b + c eine ganze Zahl zwischen 20 und 600 ist, 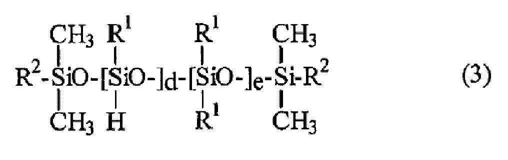 worin R¹ in der Formel (3) wie das zuvor genannte R¹ definiert ist, vorausgesetzt, dass 80 Mol-% oder mehr aller R¹ in einem Molekül Methyl sind,
R² gleich oder verschieden voneinander sein können und ein Wasserstoffatom oder eine monovalente Kohlenwasserstoffgruppe mit 1 bis 10 Kohlenstoffatomen sind, welche keine aliphatische ungesättigte Bindung und keinen aromatischen Substituenten enthalten, vorausgesetzt, dass wenigstens 80 Mol-% von R² eine Methylgruppe sind und
d, e ganze Zahlen sind, welche so ausgewählt sind, dass 10 - 50 Mol-% aller Substituenten, welche direkt an ein Siliciumatom gebunden sind, Wasserstoffatome sind, d + e eine ganze Zahl von 10 bis 200 ist, d/(d+e) 0,2 bis 0,9 beträgt und e eine ganze Zahl von gleich 1 oder mehr ist, 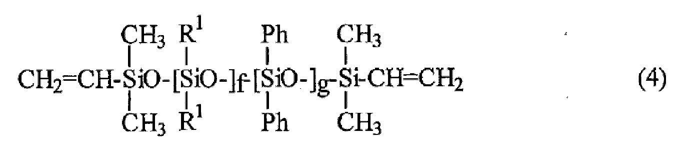 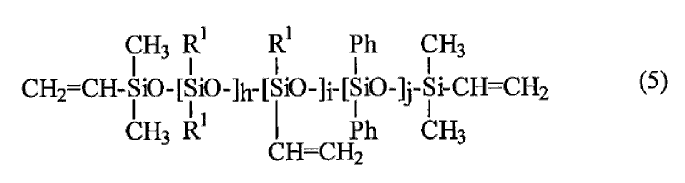 worin R¹ in den Formeln (4) und (5) wie das zuvor erwähnte R¹ definiert ist, vorausgesetzt, dass 80 Mol-% oder mehr der R¹ eine Methylgruppe sind,
Ph eine Phenylgruppe ist,
f, g, h, i, j ganze Zahlen sind, welche so ausgewählt sind, dass 0,2 bis 5 Mol-% aller Substituenten, welche direkt an ein Siliciumatom gebunden sind, Vinylgruppen sind, 5 bis 50 Mol-% Phenylgruppen sind und f + g oder h + i + j eine ganze Zahl zwischen 20 und 600 ist, i eine ganze Zahl zwischen 1 und 60 ist und g und j ganze Zahlen zwischen 1 und 300 sind, 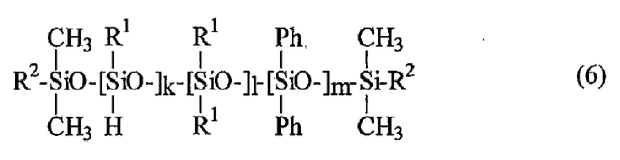 worin R¹ in Formel (6) Methyl ist,
R² wie das zuvor erwähnte R² definiert ist, vorausgesetzt, dass wenigstens 80 Mol-% von R² eine Methylgruppe sind,
Ph eine Phenylgruppe ist und
k, l, m ganze Zahlen sind, welche so ausgewählt sind, dass 10 - 50 Mol-% aller Substituenten, welche direkt an ein Siliciumatom gebunden sind, Wasserstoffatome sind und 5 - 50 Mol-% Phenylgruppen sind, k + l + m eine ganze Zahl zwischen 10 und 200 ist und k/(k + l + m) 0,2 bis 0,9 beträgt.

2. Zusammensetzung nach Anspruch 1, wobei die Menge von Organohydrogenpolysiloxan, welches der Bestandteil (B) ist, so ist, dass das molare Verhältnis von direkt an Siliciumatomen gebundenem Wasserstoff 1 bis 10-fach des molaren Verhältnisses von Vinylgruppen, welche in der gesamten Zusammensetzung enthalten sind, beträgt.

3. Zusammensetzung nach Anspruch 1 oder 2, wobei das nichtionische Tensid Polyoxyethylenlaurylether oder Polyoxyethylentridecylether ist.

4. Zusammensetzung nach einem der Ansprüche 1 bis 3, wobei als der Polyvinylalkohol des Bestandteils (E) verschiedene Arten von Polyvinylalkohol zusammen eingesetzt werden.

5. Zusammensetzung nach einem der Ansprüche 1 bis 4, wobei der Platinkomplex des Bestandteils (G) als eine Emulsionszusammensetzung hergestellt worden sind, welche als Hauptbestandteile die nachfolgenden Bestandteile (G1) bis (G4) enthält, welche mit einer Emulsionszusammensetzung enthaltend die Bestandteile (A)-(F), welche unabhängig voneinander hergestellt sind, vermischt sind:
(G1) 100 Massenteile eines Platinkomplex enthaltenden Polysiloxans,
(G2) 0,5 - 10 Massenteile eines nach Anspruch 1 definierten nichtionischen Tensids,
(G3) 1 - 20 Massenteile eines nach Patentanspruch 1 oder 4 definierten Polyvinylalkohols,
(G4) 370 - 399 Massenteile Wasser.

6. Zusammensetzung nach Anspruch 1, wobei die Menge an Wasser als Bestandteil (F) 80 bis 1.000 Massenteile beträgt.

7. Antihaftsubstrat, welches durch Beschichten und Aushärten einer Silikonemulsionszusammensetzung, wie diese in einem der Ansprüche 1 bis 4 definiert ist, auf Papier oder Film erhältlich ist.

## Revendications

1. Composition d'émulsion de silicone anti-adhésive, comprenant les ingrédients suivants :
A) 100 parties en masse d'organopolysiloxane(s) représenté(s) par la ou les formule(s) (1) et/ou (2) données ci-dessous ;
B) 1 à 50 parties en masse d'un organopolysiloxane qui comporte, dans une molécule, au moins 3 atomes d'hydrogène directement liés à un atome de silicium, représenté par la formule (3) donnée ci-dessous ;
C) 0,5 à 50 parties en masse d'au moins un organopolysiloxane comportant des groupes phényle, choisi parmi ceux représentés par les formules (4) à (6) données ci-dessous ;
D) 0,5 à 10 parties en masse d'un tensioactif non-ionique, qui est un éther d'alkyle et de poly(oxyéthylène) dont le rapport hydro-lipophile vaut de 10 à 15 et qui donne un pH valant 6,5 ou moins et une conductivité ionique valant 30 µS/cm ou moins ;
E) 1 à 20 parties en masse d'un poly(alcool vinylique) dont le degré de polymérisation vaut de 500 à 4000 et dont une solution aqueuse à 4 % présente un degré de saponification de 86 à 98 % en moles ;
F) de l'eau, en une quantité qui permet d'obtenir un mélange homogène des composants (A), (B), (C) et (D) ;
G) et un complexe de platine, comprenant de 0,001 à 0,05 partie en masse de platine ; 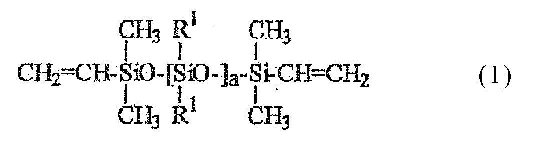 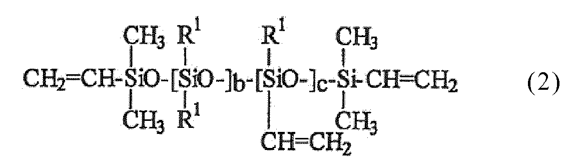 dans lesquelles formules (1) et (2)
- R¹ représente un groupe hydrocarboné monovalent comportant de 1 à 10 atomes de carbone et ne comportant pas de liaison aliphatique insaturée ou de substituant aromatique, étant entendu que les groupes représentés par ces symboles R¹ sont identiques ou différents, mais sous réserve que, dans une même molécule, il y ait 80 % en moles ou plus de tous les groupes symbolisés par R¹ qui soient des groupes méthyle,
- et les indices a, b et c sont des nombres entiers qui sont choisis de telle sorte qu'il y a de 0,2 à 5 % en moles de tous les substituants directement liés à un atome de silicium qui sont des groupes vinyle, étant entendu que l'indice a, ou la somme des indices b et c, est un nombre entier valant de 20 à 600 ; 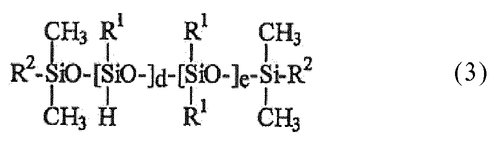
dans laquelle formule (3)
- R¹ a la même signification que celle indiquée ci-dessus pour R¹, sous réserve que, dans une même molécule, il y ait 80 % en moles ou plus de tous les groupes symbolisés par R¹ qui soient des groupes méthyle,
- les symboles R², qui peuvent représenter des entités identiques ou différentes, représentent chacun un atome d'hydrogène ou un groupe hydrocarboné monovalent comportant de 1 à 10 atomes de carbone et ne comportant pas de liaison aliphatique insaturée ou de substituant aromatique, sous réserve qu'au moins 80 % en moles des entités symbolisées par R² soient des groupes méthyle,
- et les indices d et e sont des nombres entiers qui sont choisis de telle sorte qu'il y a de 10 à 50 % en moles de tous les substituants directement liés à un atome de silicium qui sont des atomes d'hydrogène, étant entendu que la somme des indices d et e est un nombre entier valant de 10 à 200, le rapport d/(d+e) vaut de 0,2 à 0,9, et l'indice e est un nombre entier supérieur ou égal à 1 ; 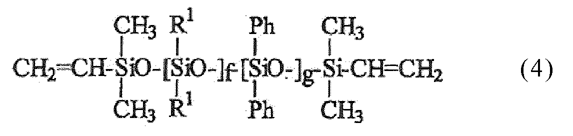 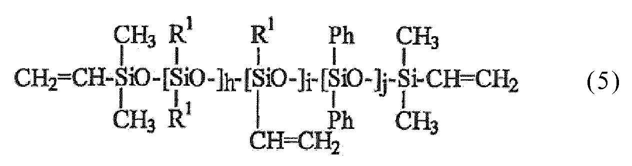
dans lesquelles formules (4) et (5)
- R¹ a la même signification que celle indiquée ci-dessus pour R¹, sous réserve qu'il y ait 80 % en moles ou plus des groupes symbolisés par R¹ qui soient des groupes méthyle,
- Ph représente un groupe phényle,
- et les indices f, g, h, i et j sont des nombres entiers qui sont choisis de telle sorte qu'il y a de 0,2 à 5 % en moles de tous les substituants directement liés à un atome de silicium qui sont des groupes vinyle et qu'il y en a de 5 à 50 % en moles qui sont des groupes phényle, étant entendu que la somme des indices f et g, ou la somme des indices h, i et j, est un nombre entier valant de 20 à 600, l'indice i est un nombre entier valant de 1 à 60, et les indices g et j sont des nombres entiers valant de 1 à 300 ; 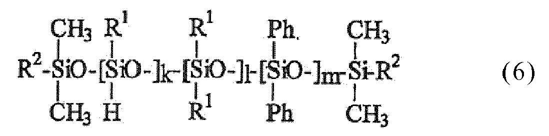
dans laquelle formule (6)
- R¹ représente un groupe méthyle,
- R² a la même signification que celle indiquée ci-dessus pour R², sous réserve qu'au moins 80 % en moles des entités symbolisées par R² soient des groupes méthyle,
- Ph représente un groupe phényle,
- et les indices k, 1 et m sont des nombres entiers qui sont choisis de telle sorte qu'il y a de 10 à 50 % en moles de tous les substituants directement liés à un atome de silicium qui sont des atomes d'hydrogène et qu'il y en a de 5 à 50 % en moles qui sont des groupes phényle, étant entendu que la somme des indices k, 1 et m est un nombre entier valant de 10 à 200 et le rapport k/(k+l+m) vaut de 0,2 à 0,9.

2. Composition conforme à la revendication 1, dans laquelle la quantité de l'organohydrogénopolysiloxane qu'est l'ingrédient (B) est telle que le nombre de moles d'atomes d'hydrogène directement liés à des atomes de silicium vaut de 1 à 10 fois le nombre de moles de groupes vinyle contenus dans toute la composition.

3. Composition conforme à la revendication 1 ou 2, dans laquelle ledit tensioactif non-ionique est un éther de lauryle et de poly-(oxyéthylène) ou un éther de tridécyle et de poly(oxyéthylène).

4. Composition conforme à l'une des revendications 1 à 3, dans laquelle, en tant que poly(alcool vinylique) pour l'ingrédient (E), des poly(alcool vinylique) de plusieurs sortes sont utilisés ensemble.

5. Composition conforme à l'une des revendications 1 à 4, dans laquelle le complexe de platine qu'est ledit ingrédient (G) est préparé sous la forme d'une composition d'émulsion dont les principaux ingrédients sont les ingrédients (G1) à (G4) indiqués ci-dessous, qui sont mélangés avec une composition d'émulsion comprenant les ingrédients (A) à (F), préparée indépendamment :
G1) 100 parties en masse d'un polysiloxane contenant un complexe de platine ;
G2) de 0,5 à 10 parties en masse d'un tensioactif non-ionique, tel que défini dans la revendication 1 ;
G3) 1 à 20 parties en masse d'un poly(alcool vinylique), tel que défini dans la revendication 1 ou 4 ;
G4) et 370 à 399 parties en masse d'eau.

6. Composition conforme à la revendication 1, dans laquelle la quantité de l'eau employée comme ingrédient (F) vaut de 80 à 1000 parties en masse.

7. Substrat anti-adhésif, qu'on peut obtenir en formant, sur du papier ou sur un film, un revêtement d'une composition d'émulsion de silicone conforme à l'une des revendications 1 à 4 et en faisant durcir celle-ci.
